# EUROPEAN PATENT APPLICATION

(11) **EP 2 006 252 A2**
(43) Date of publication of application: **24.12.2008**
(21) Application number: 07730503.5
(22) Date of filing: 23.03.2007
(51) Int. Cl.: C01F 11/06, C01B 31/20

(54) **PRECALCINATION METHOD WITH PRODUCTION OF PURE OR EASILY PURIFIED CO2 ORIGINATING FROM THE DECOMPOSITION OF CARBONATES**

(30) Priority: 31.03.2006 ES 200600845
(71) Applicant: Consejo Superior de Investigaciones Cientificas (CSIC), 28006 Madrid (ES)
(72) Inventor: ABANADES GARCÍA, Juan Carlos, E-33080 Oviedo (ES)
(74) Representative: Pons Arino, Angel
(86) International application number: PCT/ES2007/070063
(87) International publication number: WO 2007/113364

(57) **Abstract**

The method proposed consists in superheating a stream of calcined material (normally CaO) to a temperature above the calcination temperature and circulating this superheated stream of calcined material to the calciner, where the solids release heat. This calciner is also supplied with the stream of material to be calcined (normally preheated CaCO₃), so that the heat released by the hot CaO stream gives rise to decomposition of the supplied CaCO₃ to CO₂ and CaO. A portion of the CaO leaving the calciner is the calcined product and the remainder is recycled for superheating in a combustor. The CO₂ generated in the calcining stage is obtained in pure or easily purified form and is thereof capable of being used or stored

## Description

### FIELD OF THE INVENTION

Calcination Processes. Cement production process (precalciner).

### PRIOR ART

The UN Intergovernmental Panel on Climate Change recently published a Special Report on CO₂ Capture and Storage (IPCC, 2006), which reviewed the existing technologies and those under development for capturing the CO₂ generated by large stationary sources and its subsequent confinement in a number of deep geological formations. As said Report shows, in 2002 cement production was responsible for 5.8% of all the total CO₂ emissions into the atmosphere from stationary sources (sources that emit over 0.1 MtCO₂/year). As in the electricity sector, the capture and storage of CO₂ at cement plants results in a drastic reduction in CO₂ emissions. The additional cost of this operation can be compensated for in places where a CO₂ emissions market operates, as is the case in Europe, when the cost of capturing and storing CO₂ is lower than the cost of CO₂ in said trading market. Minimising the cost of CO₂ capture remains the key to ensuring that these technologies reach the stage where they are commercially viable in the medium term.

### DESCRIPTION OF THE INVENTION

The object of this invention relates to systems for the continuous calcination of a stream of solids rich in CaCO₃. For example, the process serves to precalcine the large amounts of limestone that are used for the large-scale production of cement. It is also applicable, with some small modifications, to other commercial processes that use calcination to produce lime (e.g. for SO₂ retention at power plants). The fundamental object of this invention is, therefore, to bring about calcination and use a solid stream that is rich in CaCO₃ to produce a pure or almost pure stream of CO₂ that can be permanently stored away from the atmosphere.

The application of CO₂ capture and storage technologies involves first obtaining a stream with a high concentration of CO₂, which is subjected to supercritical conditions for its ultimate storage in deep geological formations (IPCC, 2006). In the case of the cement industry, the post-combustion or oxy-combustion CO₂ capture technologies that are applicable to fossil fuel power plants are theoretically applicable to the cement industry (IPCC, 2006). There is little information available about how to put these processes into practice at cement plants and how much it could cost. However, CO₂ capture technologies are being developed as part of energy production systems based on carbonatation-calcination cycles that generate a purge of CaO (Abanades et al, 2005 Env.Sci.Tech. 39,2861). By replacing the CaC03 that is supplied to the cement plant for this purge of deactivated sorbent (predominantly CaO), it is possible to achieve a considerable energy saving at the cement plant (Abanades et al, 2005 Env.Sci.Tech.39,2861). However, these processes are still in their research and development stage and are mainly designed for the generation of electricity or H₂.

Patent P200200684 discloses a process for the capture of CO₂ by carbonatation which claims the use by the calciner of part of the heat generated in the combustion chamber to maintain the endothermic calcination reaction and regenerate the sorbent. In one of its applications, it also claims a method of carrying out the heat exchange indirectly by means of an inert solid circulating between the two chambers. In particular, this heat exchange system for the regenerator has also been disclosed with the use of the sorbent itself (i.e. CaO particles) as a means of transferring heat from the combustion chamber to the calciner. In these systems of CO₂ capture by carbonatation, the calcined material must circulate to the carbonator to react with CO₂ again (Abanades et al, 2005 Env.Sci.Tech. 39,2861).

However, the process proposed in the present invention focuses only on the capture of CO₂ contained in the continuous flow of limestone that supplies a cement plant. Since no stage of carbonatation or CO₂ capture from a gaseous stream is required, the calcination conditions can be those most suited to the production of CaO to supply the cement plant. In the precalciner disclosed in this invention there is a concentrated stream of CO₂ that originates only from the CaCO₃, and a stream of calcined material (CaO). The described process does not contemplate the capture of CO₂ generated by combustion with air of the fuel in the combustion chamber wherefrom the calcination heat comes. However, it must be stressed that in modern cement plants, with a rational use of energy, around 3/4 of the CO₂ that is emitted comes from the CaCO₃ used as a raw material for manufacturing cement, which means that this technology can have a high impact on the reduction of CO₂ emissions in cement plants.

It is a new precalcination method for a material with a high CaCO₃ content to produce a stream of calcined material and a pure or easily purified stream of CO₂. The method is based on using the heat generated in a circulating fluidised bed combustion chamber to reheat a CaO stream that flows from the calciner, continuously circulating between the burner and calciner, which transfers heat from the combustion chamber to the calciner to maintain the endothermic calcination reaction. The CO₂ generated by this calcination process, in a pure or easily purified form (mixture of CO₂ and H₂O), is in a suitable state for confinement away from the atmosphere after a series of compression, transport and storage stages, which are the same for all CO2 capture and storage systems.

The object of the invention comprises a combustion chamber where any type of fuel is burned with air, preferably at temperatures above 1000 °C, generating heat and a stream of flue gases, the composition of which depends on the fuel and the excess of air used in the combustion, which is not relevant to the object of this invention.

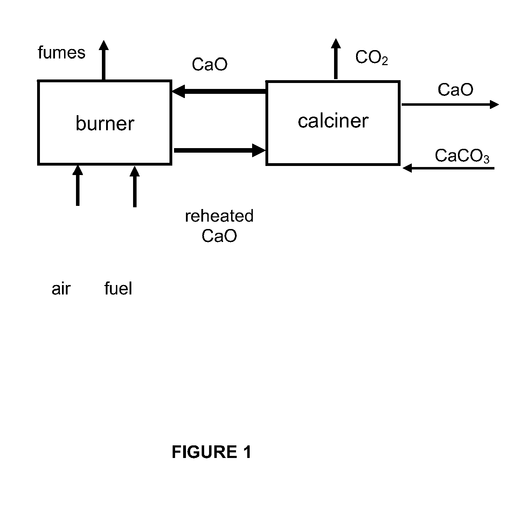

The invention is based on the possibility of maximising the amount of heat generated in the combustion chamber, which is transferred to the calciner to maintain the endothermic calcination reaction of the CaCO₃ that is used as a raw material to manufacture cement (forming CaO and CO₂) by means of a CaO stream that circulates between the burner and the calciner, releasing heat in the calciner and being reheated in the burner. The calciner must work at temperatures above 900°C, preferably at almost 950 °C, in order to ensure sufficiently fast calcination reactions, which makes it possible for the solids to remain in the calciner for a short time, thus resulting in more compact calciner designs. Optionally, to increase the calcination speed and increase the thermal gradient between the burner and the calciner, it is possible to reduce the partial pressure of CO₂ in the calciner by applying vacuum to the calciner, as claimed in patent US4748010A, and/or by injecting steam into the calciner, as claimed in P200200684. The calciner is run under these conditions to generate a pure stream of CO₂ at a lower pressure than atmospheric pressure, or a CO₂/steam mixture that is easily separated by condensing the steam (not included in Figure 1 for the sake of simplicity).

From the point of view of transferring solids between the different units and separating the solids from the gases that carry them, the units are interconnected using equipment and methods that form part of the prior art of technologies used in gas / solid fluidised bed systems.

### Brief description of the content of the figures.

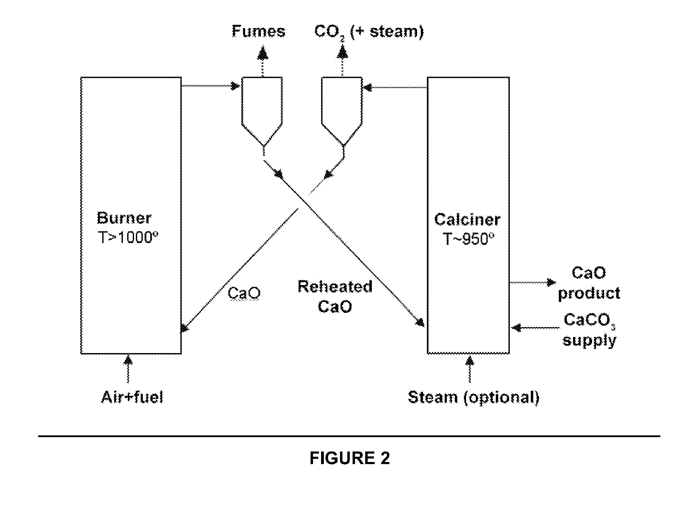

The object of the invention is shown in diagram form in Figure 1. It comprises a combustion chamber where the fuel is burned with air at temperatures above 1000 °C in the presence of a solids stream primarily containing CaO. The combustion chamber is preferably of the circulating fluidised bed type, as the combustion chamber is required to continuously process a high net flow of circulating solids (between 5 and 50 kg/m²s). Part of the heat generated during combustion is transferred as heat that is sensitive to the CaO that circulates in the combustion chamber, producing a stream of reheated CaO (which leaves the burner ideally at the temperature of the burner, given the high heat transfer characteristics between gases and fluidised particles). The reheated CaO is separated from the flue gases (e.g. by one or more cyclone-type separators) and falls by gravity into the calciner via a solids line (the solids line will include a solids air valve, e.g. J-type, not shown in the drawing for the sake of simplicity). The solids transferred from the burner enter the calciner to maintain the endothermic calcination reaction. The calciner is preferably a fluidised bed (as in the example in Figure 2). In the calciner the solids that enter from the burner (reheated CaO) and from the supply of CaCO₃ are mixed very quickly. The supply of heat to the calciner by the flow of reheated solids from the burner maintains the calcination temperature at a sufficiently high level to bring about a fast calcination reaction. Under these conditions the CaCO₃ that is supplied is broken down into CO₂ and CaO. The speed of this calcination reaction, the good mixture and the large flow of CaO from the burner means that the composition of the calciner is primarily CaO. This makes it possible to extract the CaO product from the calciner itself (as shown in Figure 2). The CaO product can also be extracted as part of the solids stream that is returned to the burner (possibility not shown in the Figure for the sake of simplicity).

It can easily be shown with balances of materials and energy that a greater preheating of the streams that enter the system (air, fuel and limestone supply) with heat from the high-temperature streams that leave the system (fumes, CO₂, CaO product) increases the system's calcination capacity. It is therefore important to have the necessary auxiliary equipment (heat exchangers) to achieve the maximum degree of preheating of said streams that enter the system. However, these auxiliary systems for preheating solids and gases are not considered an object of this invention, as they are part of the prior art of circulating fluidised systems and cement production systems. Other evident possibilities for supplying and extracting solids from the system are not considered in Figures 1 and 2. Other secondary flows relating to the most effective separation between solids and gases (e.g. using systems of separation by stages, or using other robust methods for separating solids and gases at high temperatures) are not an object of the present invention.

The total flow of solids that circulates between the burner and the calciner is determined, among other factors, by the amount of CaCO₃ to be calcined, the heating capacity of the fuel used in the burner, the temperature difference between the burner and the calciner, the temperatures to which the streams entering the system (air, fuel and CaCO₃ supply) have been preheated with the heat of the streams leaving the system (fumes, CaO product and CO₂). It can be shown (see example) that it is possible to run the system with values for the circulation of solids between the burner and the calciner that are acceptable for circulating fluidised bed systems (10-50 kg/ni2s) with reasonable values for all the previous variables.

### EXAMPLE OF EMBODIMENT OF THE INVENTION:

An applicable example will now be described, with reasonable intervals of operating conditions for the case in which the system is used as a precalciner of limestone rock (primarily CaCO₃) to produce two concentrated streams of CaO and CO₂. In the following example the main purpose of the precalcination product (CaO) is considered to be for the production of cement.

The main units described in the example are shown in Figure 2.
(1) fluidised bed combustion chamber working at 1000-1200 °C. The combustion chamber is designed to operate under adiabatic conditions. It is possible to use any fuel, but those with a low ash content or which produce ash that does not cause sintering problems are preferred. The heating capacity of the fuel determines the calcination capacity of the system, which varies between values below 30% and values above 80% when the heating capacity of the fuel varies between 10 and 45 MJ/kg (LHV) for preheating temperatures of the streams of air and CaCO₃ above 600°C. Having established a heating capacity of the fuel (for normal excesses of air above the stoichiometric quantity) and a calcination temperature, the combustion temperature determines the total flow of CaO that must enter the combustion chamber to extract and transmit most of the combustion heat to the calciner as heat that is sensitive to reheated CaO (which changes its temperature from the 900-950 °C of the calciner to the 1000-1200 °C in the combustion chamber). Representative values of this solids flow (not excluding other values) are around 5 and 50 kg/m²s of CaO, which are acceptable for the design of a circulating fluidised bed combustion chamber using existing technologies. Figure 2 shows a diagram of a cyclone, or another system for separating gases and solids, to separate the flue gases from the reheated CaO.
(2) calciner operating as a fluidised bed at 900-950 °C. Thermodynamic balance requires temperatures above 900 °C to carry out the calcination of CaCO₃ at a partial pressure of 1 atm of CO₂. The main gas that fluidises the solids in the calciner is the CO₂ itself generated during the precalcination process. However, it is necessary to work either at low partial pressures (injecting a flow of steam) or at temperatures of almost 950°C for the calcination of the solids with CaCO₃ (s3) to be fast and complete. The solids that leave the calciner (s3) only contain CaO in the example (although they contain small amounts of ash in the original fuel and other inert materials that are present in the solid, mainly consisting of CaCO₃).

## Claims

1. Precalcination method with production of pure or easily purified CO₂ from the decomposition of carbonates, **characterised in that** the heat needed for calcination is supplied by a stream of calcined solids that have been reheated in a burner at temperatures higher than the operating temperature of the calciner.

2. Precalcination method with production of pure or easily purified CO₂ from the decomposition of carbonates according to claim 1, **characterised in that** the carbonate is a stream that is rich in CaCO₃, such as the limestone rock used for the production of cement.

3. Precalcination method with production of pure or easily purified CO₂ from the decomposition of carbonates according to claims 1 and 2, **characterised in that** the combustion chamber is of the circulating fluidised bed type that operates at temperatures of 1000-1200°C at atmospheric pressure.

4. Precalcination method with production of pure or easily purified CO₂ from the decomposition of carbonates according to claims 1, 2 and 3, **characterised in that** the calcination chamber is a fluidised bed that operates at temperatures of more than 900 °C at atmospheric pressure or more than 850 °C when operating at a partial pressure of CO₂ that is lower than atmospheric pressure.

5. Use of the precalcination method according to claims 1 to 4, in all processes where calcination is used for the production of lime.

6. Use of the precalcination method according to claims 1 to 4, in the cement manufacturing process, whereby it would be feasible to purify up to three quarters of the CO₂ emissions, in a simple and economical way, with the consequent reduction of its environmental impact.
